Europäisches Patentamt

European Patent Office

Office européen des brevets

(11) Veröffentlichungsnummer: **0 090 909**
**A2**

## (12) EUROPÄISCHE PATENTANMELDUNG

(21) Anmeldenummer: **83100280.3**

(22) Anmeldetag: **14.01.83**

(51) Int. Cl.³: **B 60 R 1/06**

(30) Priorität: 07.04.82 DE 8209927 U
24.12.82 DE 8236420 U

(43) Veröffentlichungstag der Anmeldung:
12.10.83 Patentblatt 83/41

(84) Benannte Vertragsstaaten:
AT BE CH DE FR GB IT LI NL SE

(71) Anmelder: MEKRA Rangau Plastics GmbH & Co KG
Schuckertstrasse 12-20
D-8510 Fürth/Bay. 18(DE)

(72) Erfinder: Lang, Heinrich
Seenheimstrasse 101a
D-8531 Ergersheim(DE)

(74) Vertreter: Rau, Manfred, Dr. Dipl.-Ing. et al,
Patentanwälte Rau & Schneck Postfach 91 04 80 Lange
Zeile 30
D-8500 Nürnberg 91(DE)

(54) Motorisch verstellbarer Rückspiegel.

(57) Bei einem motorisch verstellbaren Rückspiegel mit einem mit einem Fahrzeug verbindbaren Befestigungs-Bügel (8) und einer an der Glasaufnahme des Spiegelglases angreifenden Stellmotoreinrichtung (3, 3'), insbesondere für Lastkraftwagen, ist vorgesehen, daß die Stellmotoreinrichtung (3, 3') unmittelbar mit dem Befestigungs-Bügel (8) verbunden ist. Hierdurch wird im Gegensatz zu herkömmlichen Konstruktionen eine besonders flache Bauweise erreicht, so daß das Blickfeld des Fahrers durch das Spiegelgehäuse nicht eingeschränkt wird.

FIG.1

EP 0 090 909 A2

MEKRA Rangau Plastics GmbH & Co KG, Schuckertstr. 12-20
8510 Fürth/Bay. 18

-------------------------------------------------------------

Motorisch verstellbarer Rückspiegel

-------------------------------------------------------------

Die Erfindung richtet sich auf einen motorisch verstellbaren Rückspiegel, insbesondere für Lastkraftwagen, mit einem mit einem Fahrzeug verbindbaren Befestigungs-Bügel und einer an der Glasaufnahme des Spiegelglases angreifenden Stellmotoreinrichtung.

Bekannte derartige Rückspiegel weisen ein Gehäuse auf, welches praktisch über die gesamte Spiegelfläche so dimensioniert ist, daß es der Einbautiefe der Stellmotoreinrichtungen zum Verstellen des Spiegelglases entspricht, wobei das Gehäuse mit dem Befestigungs-Bügel verbunden ist. Durch eine derartige Gestaltung wird das Blickfeld des Fahrers in Richtung schräg nach vorne erheblich eingeschränkt, was sich bei Rangiermanövern, bei welchen es auf eine sehr exakte Platzausnutzung ankommt, als außerordentlich nachteilig erweist.

0090909

Hiervon ausgehend liegt der Erfindung die Aufgabe zugrunde, einen motorisch verstellbaren Rückspiegel so auszubilden, daß das Spiegelgehäuse das direkte Blickfeld möglichst wenig einschränkt.

Diese Aufgabe wird bei einem Rückspiegel der eingangs genannten Art dadurch gelöst, daß die Stellmotoreinrichtung unmittelbar mit dem Befestigungs-Bügel verbunden ist. Durch diese Gestaltung wird ein Vorurteil der Fachwelt überwunden, welches dahin ging, daß bei derartigen Spiegeln das Gehäuse verhältnismäßig großvolumig ausgebildet sein und die Verbindung mit dem Fahrzeug über dieses erfolgen müsse.

Durch die erfindungsgemäß erzielte geringe Bautiefe über fast die gesamte Gehäuse-Grundfläche wird der Blick nach seitlich vorne nur geringfügig behindert. Hinzu gesellt sich schließlich noch die Möglichkeit einer kostengünstigen Herstellung. Dadurch daß das Gehäuse dem Spiegel unmittelbar folgt, wird insbesondere bei großen, senkrecht anzuordnenden Spiegeln mit Höhen von 250 mm und mehr das Blickfeld erheblich verbessert. Darüber hinaus ist das Glas ohne weiteres auswechselbar, da das Gehäuse nicht hinderlich ist. Wesentlich ist also, daß ein fest mit dem Bügel verbundenes Gehäuse, in welchem der Spiegel schwenkbar gelagert ist, und welches entsprechend großvolumig ausgestaltet ist, entfällt.

In weiterer Ausgestaltung der Erfindung kann der Spiegel mit der Befestigungseinrichtung, welche insbesondere stativklemmenartig ausgebildet sein kann, um eine horizontale Achse schwenkbar verbunden sein. Eine derartige horizontale Achse kann z. B. durch eine Gewindeschraube mit Mutter gebildet sein. Dies macht es möglich, eine optimale Grundeinstellung des Spiegels vorzunehmen, so daß durch die motorische Verstellung das gesamte tatsächlich in Betracht kommende Blickfeld abzudecken ist.

Mit Vorteil ist weiterhin vorgesehen, daß das Gehäuse im wesentlichen plattenförmig ausgebildet ist und lediglich im Befestigungsbereich eine Aufwölbung aufweist. Diese Gestaltung nutzt die erfindungsgemäß möglich werdende niedrige Bauhöhe konsequent aus und liefert dennoch aerodynamisch und auch ästhetisch befriedigende Ergebnisse.

Schließlich kann vorteilhafterweise an der Gehäuserückwand noch eine elektrische Anschlußbuchse angeordnet sein. Auf diese Weise kann bei einer erforderlich werdenden Abnahme des Spiegels bzw. bei der nachfolgenden erneuten Montage die elektrische Verbindung der Stellmotoreinrichtung mit der Betriebsspannung und den Steuerschaltern besonders bequem unterbrochen bzw. wiederhergestellt bzw. eine Spiegelheizung angeschlossen werden. Grundsätzlich kann der elektrische Anschluß aber auch direkt erfolgen.

Als besonders günstig erweist sich die erfindungsgemäße Gestaltung, wenn vorgesehen ist, daß die Stellmotoreinrichtung seitlich versetzt gegen die Mittellängsachse des Rückspiegels mit dem Befestigungs-Bügel verbunden ist. Hierdurch wird zum einen erreicht, daß der Rückspiegel jeweils durch Drehung um 180 Grad in einer Position weiter außerhalb oder näher am Fahrzeug befestigt werden kann. Darüber hinaus ergibt diese Art der Befestigung eine Verstellkinematik mit erweiterten Möglichkeiten. Selbstverständlich folgt auch bei dieser Gestaltung die Außenkontur des Gehäuses soweit möglich der eigentlichen Spiegelebene, so daß

- 4 -

also auch hier die Einschränkung des Blickwinkels durch das Gehäuse erheblich geringer ist als bei herkömmlichen vergleichbaren Rückspiegeln.

Weitere Merkmale und Vorteile der Erfindung ergeben sich aus der folgenden Beschreibung einer bevorzugten Ausführungsform anhand der Zeichnung. Dabei zeigen:

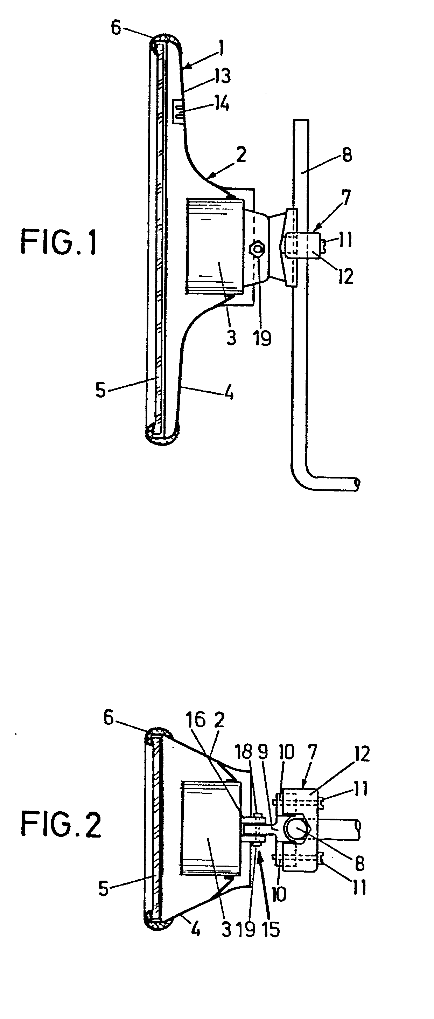

Fig. 1 einen schematischen Längsschnitt durch einen erfindungsgemäßen Rückspiegel mit Halterung,

Fig. 2 einen schematischen Querschnitt,

Fig. 3 einen Querschnitt durch eine Ausführungsform mit asymetrischer Befestigung und

Fig. 4 eine Ansicht von hinten der Ausführungsform nach Fig. 3.

Ein Gehäuse 1 eines erfindungsgemäßen Rückspiegels ist im wesentlichen plattenförmig ausgebildet und weist lediglich im Befestigungsbereich eine Aufwölbung 2 auf. Das Gehäuse 1 umschließt die lediglich ganz schematisch dargestellte Stellmotoreinrichtung 3, die Glasaufnahme 4 und das Spiegelglas 5. Das Gehäuse wird außen von einem elastischen Wulst 6 umgeben.

Die Stellmotoreinrichtung 3 greift unmittelbar an der Glasaufnahme 4 an und weist an ihrer Rückseite eine stativklemmenartige Befestigungseinrichtung 7 auf, welche die Verbindung zu einem Befestigungsbügel 8 herstellt.

- 5 -

Der Befestigungsbügel 8 ist im Ausführungsbeispiel als im wesentlichen L-förmig gestaltet, kann aber ebenso eine U-Grundform aufweisen, wobei dann die beiden U-Schenkelenden am LKW befestigt werden und der Rückspiegel im Bereich des U-Bodens angebracht ist.

Die stativklemmenartige Befestigungseinrichtung 7 umfaßt einen mit der Stellmotoreinrichtung 3 unmittelbar verbundenen Grundkörper 9, welcher zu der von der Stellmotoreinrichtung 3 abgewandten Seite kreissegmentförmig ausgeformt ist. Der Grundkörper weist außerdem Gewindebohrungen 10 auf, in welche Schrauben 11 eingreifen, welche ein Halteteil 12 durchsetzen. Das Halteteil 12 ist etwa U-förmig ausgebildet, wobei die Schrauben 11 in den U-Schenkeln angeordnet sind. Der U-Boden des Halteteils 12 ist giebeldachartig ausgebildet.

Aus der vorstehenden Beschreibung wird deutlich, daß die erfindungsgemäße Konstruktion eine außerordentlich flache Bauweise ermöglicht, durch welche das Sichtfeld des Fahrers nur wenig beeinträchtigt wird. Die Befestigungseinrichtung 7 ermöglicht eine problemlose Grundeinstellung des Spiegels sowohl hinsichtlich der Höhe des Bügels 8, als auch hinsichtlich des Schwenkwinkels um die Bügelachse. Hierzu müssen lediglich die Schrauben 11 gelockert und wieder angezogen werden. Durch ein vollständiges Lösen der Schrauben 11 ist es möglich, den Spiegel bei Bedarf ganz abzunehmen.

An der Gehäuserückwand 13 des Gehäuses 1 ist eine elektrische Anschlußbuchse 14 vorgesehen, welche bei einem notwendig werdenden Abnehmen oder Wiederanbringen des Rückspiegels mühelos die Unterbrechung bzw. Herstellung der elektrischen Verbindung mit den Betätigungsschaltern möglich macht.

Die Befestigungseinrichtung 7 ist mit der Stellmotoreinrichtung 3 über einen Schwenkmechanismus 15 verbunden. Der Schwenkmechanismus 15 umfaßt zwei zueinander parallele, im Abstand voneinander an der Stellmotoreinrichtung 3 befestigte Flansche 16, zwischen welche ein Flansch 17 der Befestigungseinrichtung 7 eingreift. Eine Inbusschraube 18 mit Mutter 19 durchsetzt die Flansche 16, 17 und bildet so eine horizontale Schwenkachse, welche es ermöglicht, eine Grundeinstellung des Spiegels vorzunehmen.

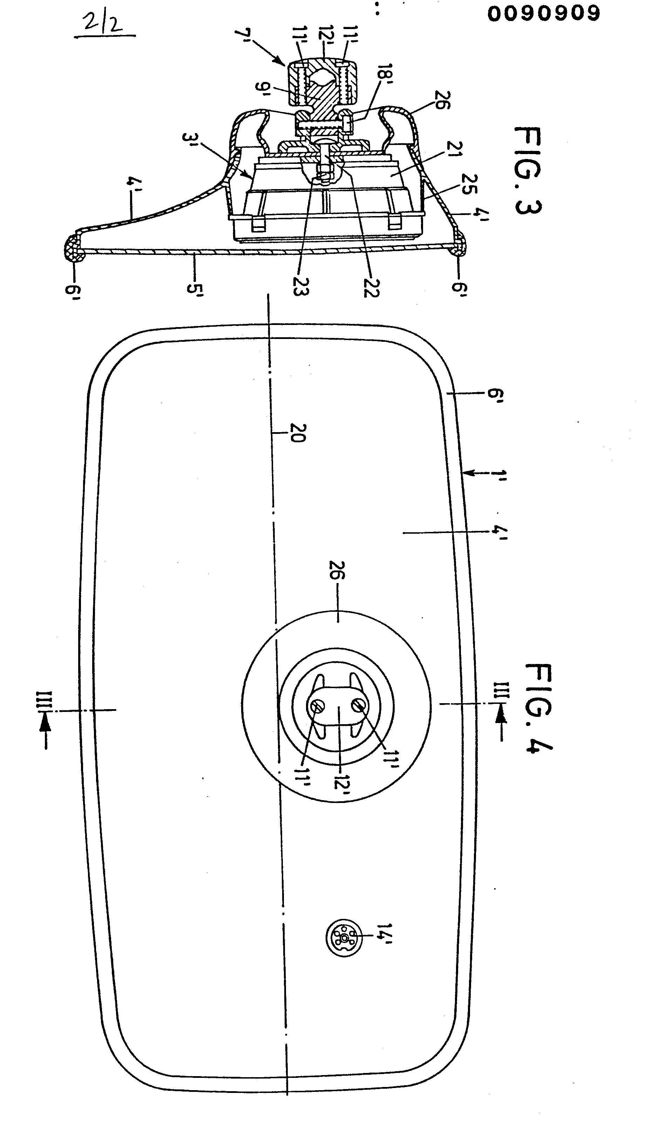

Bei der in Fig. 3 und 4 dargestellten Ausführungsform ist die Stellmotoreinrichtung 3' mit dem Befestigungs-Bügel 8 außerhalb der Mittellängsachse 20 des Rückspiegels verbunden. Wie aus Fig. 3 ersichtlich umfaßt die Stellmotoreinrichtung 3' ein ortsfestes Teil 21, welches mittels der Schraube 22 und der Muttern 23 fest mit der Befestigungseinrichtung 7' verbunden ist. Relativ zum Teil 21' der Stellmotoreinrichtung 3' ist ein Teil 24 um zwei zueinander senkrechten Achsen motorisch verstellbar angeordnet. Mit dem Teil 24 ist die Glasaufnahme 4' und damit auch das Spiegelglas 5' über eine Steghülse 25 fest verbunden. Eine Manschette 26 aus elastischem, gummiartigem Material übergreift die Glasaufnahme 4', so daß einerseits das Eindringen von Feuchtigkeit in das Gehäuseinnere vermieden wird und andererseits sich die Glasaufnahme 4' bei motorischer Betätigung frei gegenüber den ortsfesten Teilen bewegen kann.

Auch bei dieser Ausführungsform folgt das Gehäuse 1', welches im wesentlichen durch die Glasaufnahme 4' gebildet wird, möglichst eng dem Spiegel 5', um den erfindungsgemäß erzielbaren Vorteil eines möglichst großen Blickfeldes optimal zu verwirklichen.

Patentansprüche:

1.) Motorisch verstellbarer Rückspiegel mit einem mit einem Fahrzeug verbindbaren Befestigungs-Bügel (8) und einer an der Glasaufnahme des Spiegelglases angreifenden Stellmotoreinrichtung (3, 3'), insbesondere für Lastkraftwagen, dadurch gekennzeichnet, daß die Stellmotoreinrichtung (3, 3') unmittelbar mit dem Befestigungs-Bügel (8) verbunden ist.

2.) Motorisch verstellbarer Rückspiegel nach Anspruch 1, insbesondere mit einer stativklemmenartigen Befestigungseinrichtung (7, 7'), dadurch gekennzeichnet, daß der Spiegel mit der Befestigungseinrichtung (7, 7') um eine horizontale Achse schwenkbar verbunden ist.

3.) Motorisch verstellbarer Rückspiegel nach Anspruch 1 oder 2, dadurch gekennzeichnet, daß ein die Stellmotoreinrichtung (3, 3') umgebendes Gehäuse (1, 1') im wesentlichen plattenförmig ausgebildet ist und lediglich im Befestigungsbereich eine Aufwölbung (2, 2') aufweist.

4.) Motorisch verstellbarer Rückspiegel nach einem der Ansprüche 1 bis 3, dadurch gekennzeichnet, daß an der Gehäuserückwand (13) eine elektrische Anschlußbuchse (14) angeordnet ist.

5.) Motorisch verstellbarer Rückspiegel nach einem der Ansprüche 1 bis 4, dadurch gekennzeichnet, daß die Stellmotoreinrichtung (3, 3') mit dem Befestigungs-Bügel (8) außerhalb der Mittellängsachse (20) des Rückspiegels verbunden ist.

FIG.1

FIG.2

0090909

FIG. 3

FIG. 4